# EUROPEAN PATENT SPECIFICATION

(11) **EP 2 548 823 B1**
(45) Date of publication and mention of the grant of the patent: **08.01.2014**
(21) Application number: 12176889.9
(22) Date of filing: 18.07.2012
(51) Int. Cl.: B65G 47/14

(54) **Orienting device for objects**
Vorrichtung zum Orientieren von Gegenständen
Dispositif pour orienter des objets

(30) Priority: 20.07.2011 IT MI20111349
(43) Date of publication of application: 23.01.2013
(73) Proprietor: Bonino S.p.A., 15100 Alessandria (IT)
(72) Inventor: Pagliano, Alberto, I-15100 ALESSANDRIA (IT)
(74) Representative: Leihkauf, Steffen Falk

(56) References cited:
- EP-A1- 1 016 601
- EP-A2- 0 997 406
- WO-A1-2007/116155
- US-A- 4 995 503

## Description

The present invention relates in general to systems for orientating objects and in particular to an orientator for arranging a plurality of objects of the same shape in sequence and with a predetermined orientation.

Such orientators are usually used on production, processing, assembly and packaging lines or the like of industrial or consumer products so as to permit the feeding of components, pieces, products (hereafter "objects") with the orientation required for the subsequent step of treatment or processing.

There are known orientators comprising a series of orientation seats movable along a handling path, wherein each orientation seat is suitable for respectively receiving one of such objects either in a desired vertical orientation or in a vertical orientation other than that desired, a feeder which conveys said objects to said orientation seats in an initial point of the handling path, a compressed air expeller blower which directs a jet of compressed air against the objects housed in the orientation seats so as to expel from the orientation seats those objects having an orientation other than that desired, as well as an extractor which picks up, downstream of the handling path, the objects with the desired vertical orientation from the orientation seats.

The known extractors may comprise chutes or conveyor belts for conveying the objects as well as an open or closed guide channel for maintaining the orientation of the objects during their extraction from the orientation seats and their removal from the handling path. Such guide channel is delimited by a lower support surface, an upper surface opposite the support surface and by two side surfaces opposite each other formed in a system of walls screwed to the support structure of the orientator and shaped to adapt to the shape of the object to be orientated. WO2007/116155A1 describes an orientation device according to the preamble of claim 1 with an adjustable extractor side wall.

Such prior solutions, despite being structurally simple and economical, have the drawback that in the case of jamming of one or two objects, such as capsules, inside the guide channel, the latter can only be released by acting from outside on the jammed objects, for example with a screwdriver, or by dismantling the extractor to open the guide channel thereof and remove the jammed objects. This entails undesirable downtime of the orientator, as well as the risk of damage to the extractor and to the manipulated objects during such intervention. In addition, for the correct mutual positioning of the guide walls after dismantling a specialised operator may need to be called in.

The purpose of the present invention is therefore to make available an orientation device of objects having characteristics such as to overcome the drawbacks mentioned with reference to the prior art.

Within such general purpose, one specific purpose is to propose an orientation device of objects having characteristics such as to reduce downtime in the case of jamming of the extractor.

A further purpose of the invention is to propose an orientation device of objects which permits the objects jammed to be liberated from the extractor without having to use tools or implements inside the guide channel.

A further purpose of the invention is to propose an orientation device of objects having characteristics such as to overcome the need to dismantle the extractor in the case of jamming and during cleaning and maintenance operations of the guide channel.

These and other purposes are achieved by an orientation device according to claim 1 or claim 2.

The dependent claims refer to advantageous embodiments of the invention.

According to the invention, the orientation device comprises:
- a support structure,
- a series of orientation seats wherein each single orientation seat is suitable for receiving a single object,
- a seat support connected to the support structure and supporting the series of orientation seats, wherein said seat support defines a handling path of the objects,
- means for moving the series of orientation seats in a direction of movement along the handling path,
- an extractor suitable for receiving the objects in a removal point of the handling path and for removing the objects from the orientation seats along an extraction path defined by a guide channel, wherein the guide channel comprises at least one mobile wall movable in a guided manner between an open position distanced from the extraction path so that the guide channel is open transversally to the extraction path and a working position near the extraction path so that the guide channel is closed transversally to the extraction path, as well as releasable blocking means for blocking the mobile wall in the working position.

Thanks to the guided mobile wall and the releasable blocking means, the guide channel can be easily opened and closed in case of jamming of the orientated objects, cleaning of the extractor or general maintenance. Downtime of the orientation device is thereby shortened and the need to dismantle the extractor or intervene with implements or tools in the guide channel which may damage the extractor itself or the jammed objects, is thereby overcome. Moreover, thanks to the guided opening and closing of the mobile wall and to the blocking means, the mobile wall itself may be easily positioned in its correct working position without any need for specialised technicians to be called in.

For a clearer comprehension of the invention and its advantages some of its embodiments will be described below by way of a non-limiting example, with reference to the appended drawings, wherein:

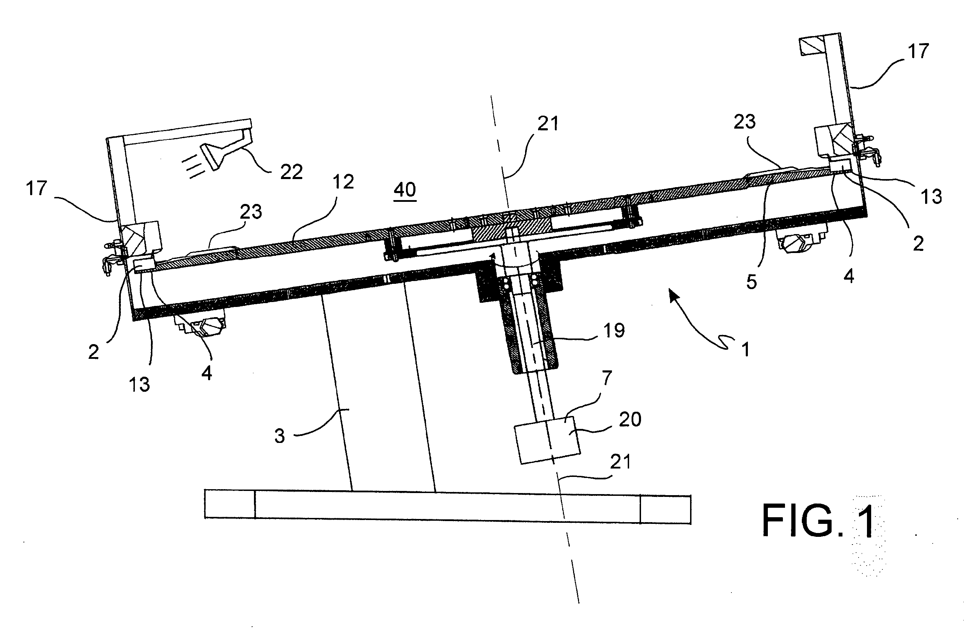

figure 1 is a radial cross-section view of an orientation device according to one embodiment of the invention;

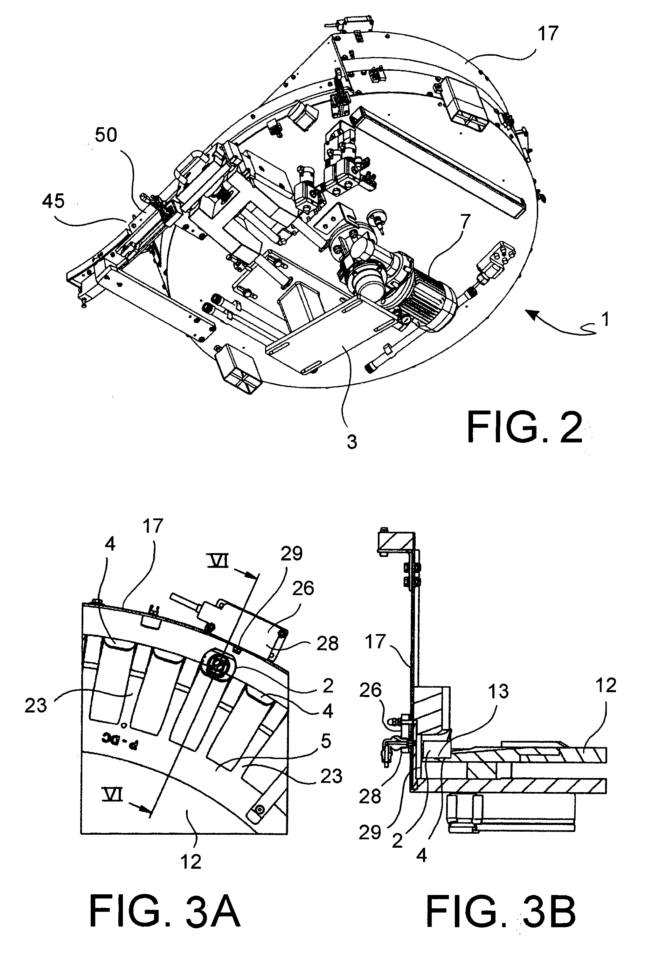

figure 2 is a view from below of an orientation device according to one embodiment of the invention;
figures 3A and 3B are views from above and in cross-section of a detail of an orientation device according to one embodiment of the invention;

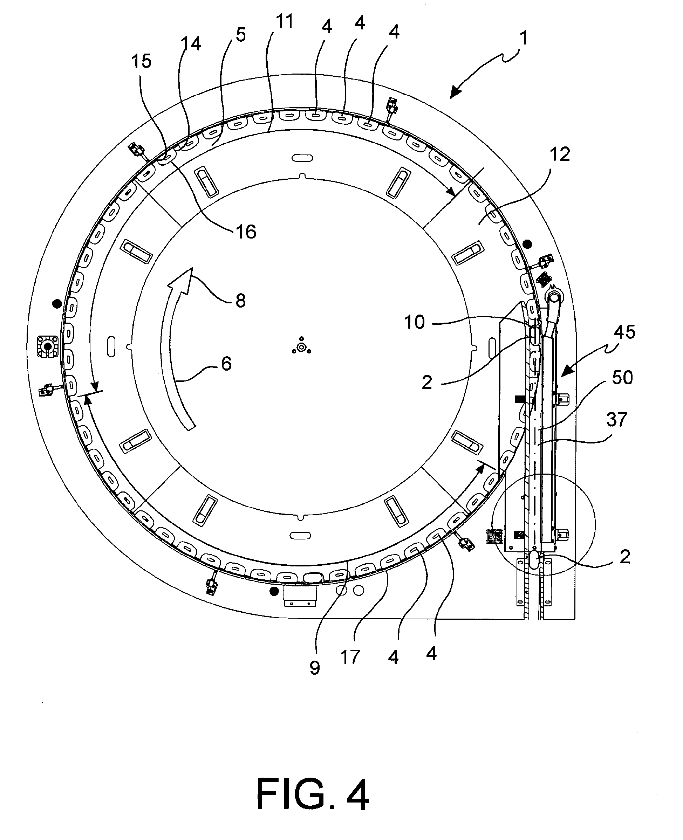

figure 4 is a view from above, partially in cross-section, of an orientation device according to one embodiment of the invention;
figure 5 shows a front view of an extractor of the orientation device according to one embodiment, in an open configuration;
figure 6 shows a front view of the extractor in figure 5, in a closed configuration;

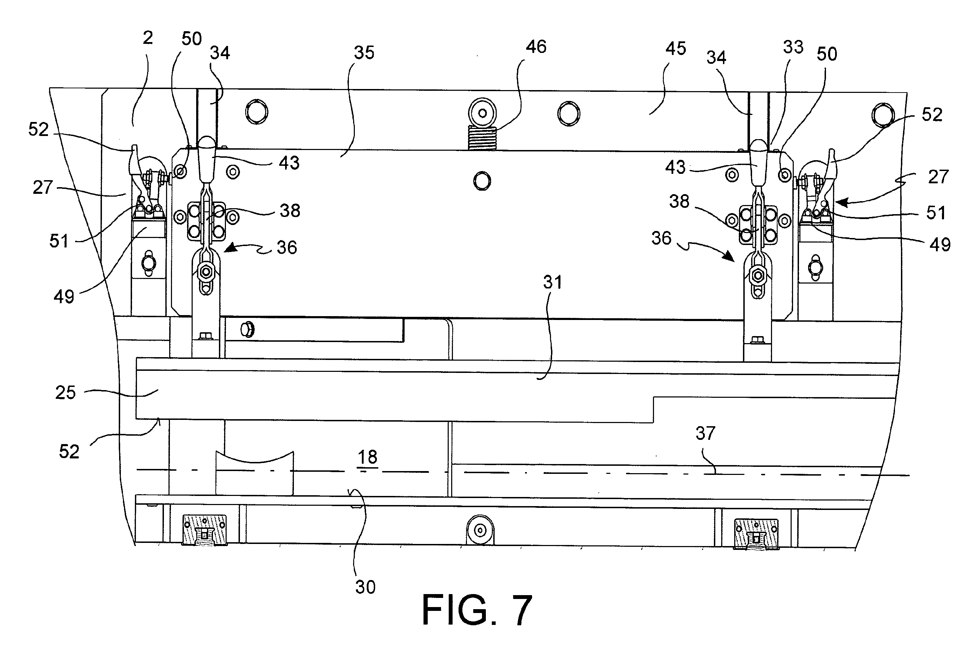

figure 7 is a cross-section view according to the line VII-VII in figure 5;

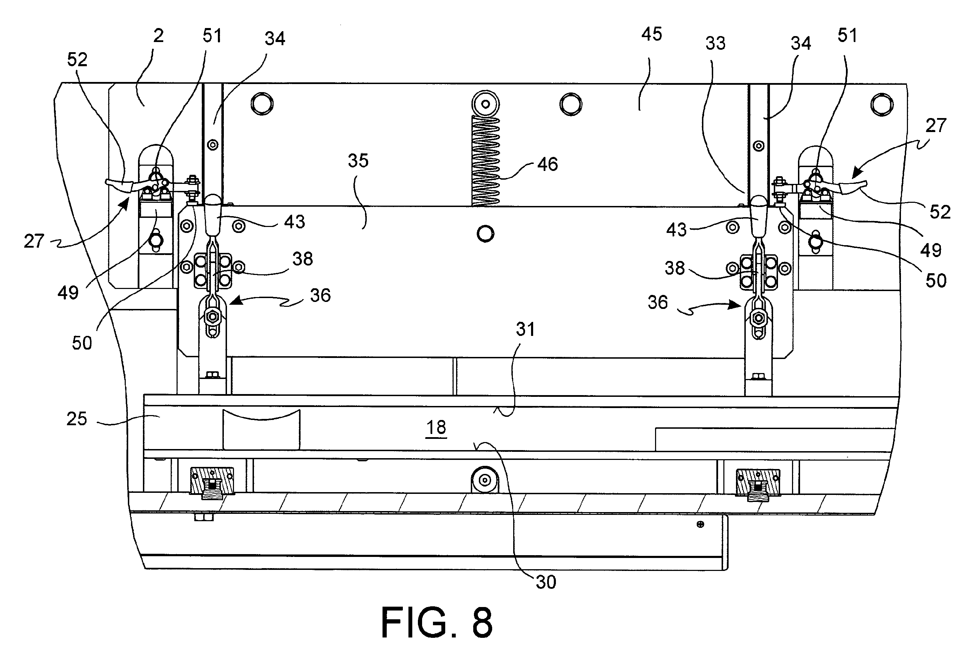

figure 8 is a cross-section view according to the line VIII-VIII in figure 6;

With reference to the figures, an orientation device 1 for the orientation of objects 2, for example capsules, comprises a support structure 3, a series of orientation seats 4 wherein each single orientation seat 4 is suitable for receiving a single object 2 in one or more predefined orientations, a seat support 5 connected to the support structure 3 and supporting the series of orientation seats 4 wherein said seat support 5 defines a handling path 6 of the objects 2, as well as means for moving 7 the series of orientation seats 4 in a direction of movement 8 along the handling path 6. The handling path 6 is delimited upstream by a feed point or feed section 9 of the objects 2, downstream by a removal point 10 of the objects 2, and comprises an orientation section 11, positioned downstream of the feed point 9 with reference to the direction of movement 8.

The orientation device 1 may also comprise means of expulsion 26, positioned along the orientation section 11 and configured so as to expel the objects having an orientation different from the desired orientation from the orientation seats 4.

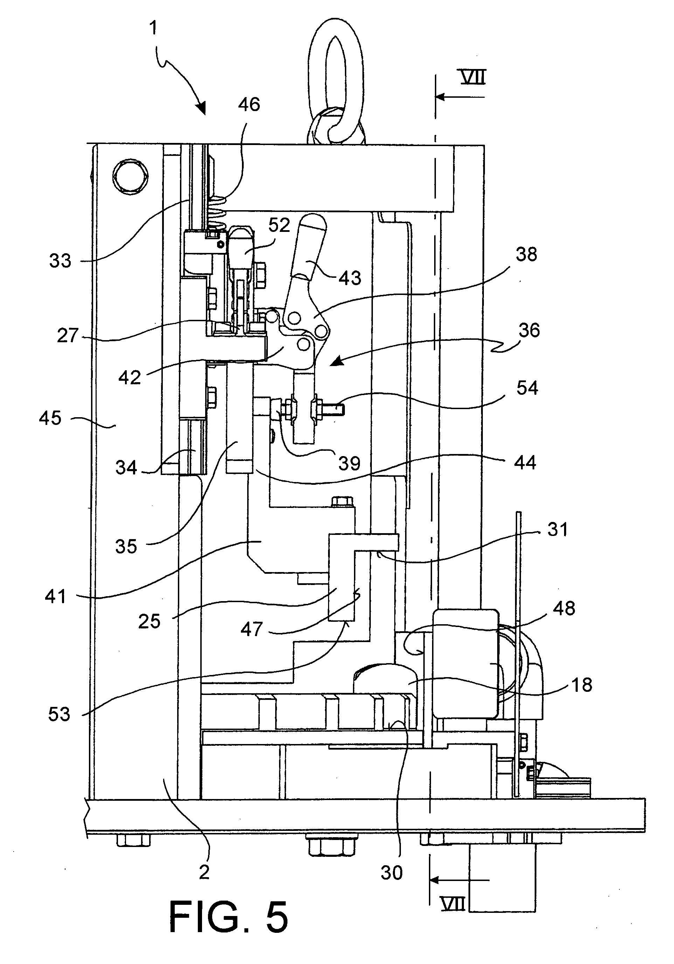

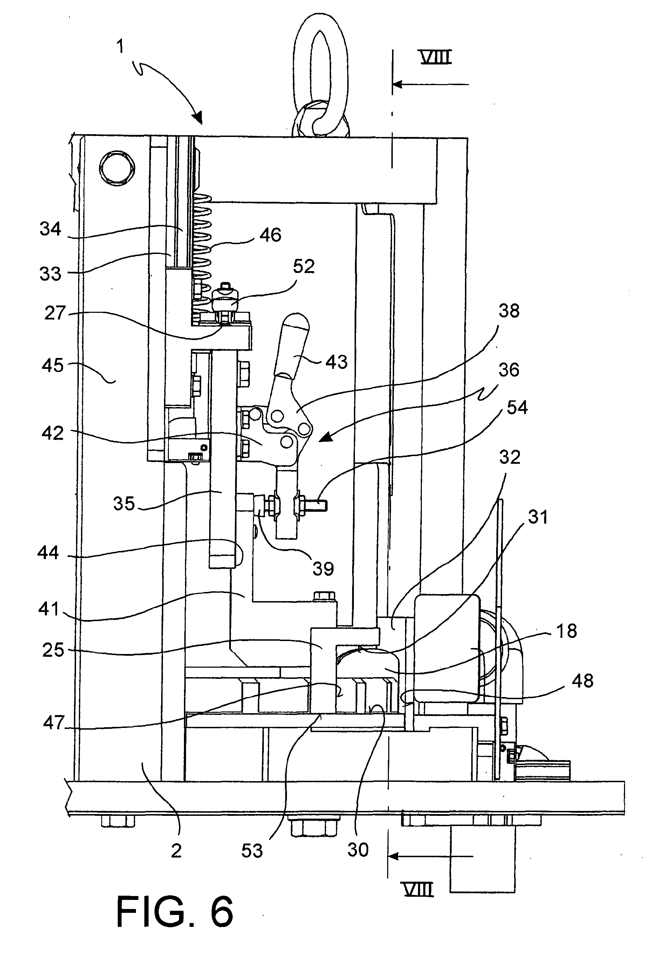

The orientation device 1 further comprises an extractor 45 suitable for receiving the (orientated) objects 2 in a removal point 10 of the handling path 6 and distancing the objects 2 from the orientation seats 4 along an extraction path 37 defined by a guide channel 18. The guide channel 18 comprises at least one wall 25 movable in a guided manner between an open position (Fig.5) distanced from the extraction path 37 so that the guide channel 18 is open transversally to the extraction path 37 and a working position (Fig.6) approximated to the extraction path 37 so that the guide channel 18 is closed transversally to the extraction path 37, as well as releasable blocking means 27 for blocking the mobile wall 25 in the working position.

Thanks to the guided mobile wall 25 and the releasable blocking means 27, the guide channel 18 can be easily opened and closed in case of jamming of the orientated objects, cleaning of the extractor 45 or general maintenance. Downtime of the orientation device 1 is thereby shortened and the need to dismantle the extractor 45 or intervene with implements or tools in the guide channel 18 which may damage the extractor itself or the jammed objects, is thereby overcome. Moreover, thanks to the guided opening and closing of the mobile wall and to the blocking means, the mobile wall itself may be easily positioned and firmly held in its correct working position without any need for specialised technicians to be called in.

According to the invention, the guide channel 18 comprises a bottom surface 30 which the objects 2 rest on during extraction, two lateral erect, e.g. substantially vertical, guide surfaces 47, 48 opposite to and facing each other, which prevent a lateral exit of the objects 2 from the extraction path 37, as well as an upper surface 31 opposite to and facing the bottom surface 30 and which prevents an upward exit of the objects 2 from the extraction path 37. In the working position of the mobile wall 25 and therefore with the guide channel 18 "closed", such guide channel is not necessarily a tubular and circumferentially closed channel. The guide channel 18 may be configured as a tubular and circumferentially closed channel or, alternatively, as an open channel having a longitudinal slit or groove 32, as illustrated in Fig.6.

According to one embodiment, the mobile wall 25 forms at least part of the upper surface 31 (preferably the entire upper surface 31) in such a way that, by displacing the mobile wall from the working position (Fig.6) to the open position (Fig.5), the upper surface 31 is distanced from the bottom surface 30 to free objects 2, e.g. capsules, stuck between the bottom 30 and upper 31 surfaces.

Additionally or alternatively, the mobile wall 25 forms at least part of one of the lateral surfaces 47, 48 (preferably one of the lateral surfaces 47, 48 is formed entirely in the mobile wall 25) in such a way that, by displacing the mobile wall 25 from the working position (Fig.6) to the open position (Fig.5), the lateral guide surfaces 47, 48 are distanced from each other. This facilitates to vacate the guide channel 18 in the case of jamming of one or more objects 2 between the two lateral guide surfaces 47, 48.

In the case in which a least a part of the extraction path 37 extends in a direction approximately tangent to the (e.g. circular) handling path 6 or in all cases in which a least a part of the extraction path 37 extends laterally along the handling path 37, the lateral guide surfaces 47, 48 comprise a first lateral guide surface 47 positioned on a first side of the extraction path 37 closer to (or facing) the handling path 6 and a second lateral guide surface 48 positioned on a second side of the extraction path 37 further from (or facing away from) the handling path 6. Advantageously, the mobile wall 25 forms the upper surface 31 and the first lateral guide surface 47, in such a way that the guide means and the blocking means 27 described below are positioned between the extraction path and the handling path and do not obstruct external access to the guide channel 18.

According to one embodiment, the mobile wall 25 has an elongated shape with an angular transversal cross-section, in particular an overturned "L" shape with its concave side facing the inside of the guide channel 18 and having an upper horizontal portion which forms the upper guide surface 31 and a vertical portion which forms the lateral guide surface 47 or 48.

According to one embodiment, the mobile wall 25 extends along a predominant portion of the guide channel 18 and is more than half the length of the guide channel 18, preferably over 3/4 of the length of the guide channel 18.

The extractor 45 further comprises a guide device with one or more guides 34, such as metal profiles, fitted to the support structure 3, a mobile support 35 (preferably a translatable plate) fitted so as to move along the guides 34 and one or more releasable connectors 36 which connect the mobile wall 25 to the mobile support 35. The releasable connectors 36 comprise a first clamping group 38 connected to the mobile support 35 and having a clamping portion 39 configured to clamp the mobile wall 25 or an intermediate adaptor 41 in turn connected (for example by screws 42) to the mobile wall 25, against the mobile support 35. The clamping portion 39 is connected (preferably with the possibility of adjusting the relative position, for example by means of an adjustment screw 54) to a first releasable blocking mechanism 42, preferably an articulated quadrilateral linkage mechanism, manually operable by means of a first lever 43. This way a quick connection and rapid detachment between the mobile wall 25 and the mobile support 35 may be achieved.

Advantageously, the mobile support 35 and the mobile wall 25 or intermediate adaptor 41, have abutment surfaces 44 which act as a geometric reference for the correct reciprocal positioning of the two parts.

The mobile support 35 may in addition be pressed, for example by a counterweight or by means of an elastic spring 46 in an opposite direction to the gravitational force acting on the mobile support 35. In the case in which the guides 34 determine a vertical mobility or in any case a possibility of raising and lowering the mobile support 35 and the mobile wall 25, the elastic preloading or counterweight at least partially compensates the gravitational effect and facilitates a manual movement of the mobile wall 25.

The releasable blocking means 27 comprise a second clamping group 49 connected to the support structure 3 and having a blocking portion 50 configured to abut against the mobile support 35, the intermediate adaptor 41 or against the mobile wall 25 and block them in a position such that the mobile wall 25 is held in the working position. The blocking portion 50 is connected (preferably with the possibility of adjusting the relative position, for example by means of an adjustment screw 54) to a second releasable blocking mechanism 51, preferably an articulated quadrilateral linkage mechanism, manually operable by means of a second lever 52. This way a rapid release blocking may be achieved.

Advantageously, the releasable blocking means 27 and in particular the second clamping group 49 are further configured to be able to block the mobile support 35 and the mobile wall 25 in the open position. This makes it possible to operate on the guide channel without having to hold the mobile wall in the open position manually.

Advantageously, the mobile wall 25 and a further wall of the guide channel 18 form abutment surfaces 53 which act as a geometric reference for the correct positioning of the mobile wall 25 in the working position.

The mobile wall 25 may be guided in a translatory and/or rotary manner in a direction generally transversal to the extraction path 37, preferably the mobile wall 25 may be raised from the working position to the open position and lowered from the open position to the working position.

The seat support 5 may be configured as a support ring 5 extending along an outer circumference of a rotating plate 12 and preferably connected thereto.

The single orientation seats 4 may be delimited by a seat bottom 13 on which the object 2 rests by means of gravity, as well as by lateral surfaces 14, 15, 16, in particular a front surface 14 delimiting the orientation seat 4 in the direction of movement 8, a rear surface 15 opposite the front surface 14 and a first lateral surface 16 delimiting the orientation seat 4 in the radially inward direction with reference to the rotation axis 21 of the rotating plate 12.

In order to delimit the orientation seats 4 on their radially outward side too, a lateral wall 17 may be envisaged extending circumferentially substantially all along the handling path 6 and connected in a stationary manner to the support structure 3. A radially inner surface facing the orientation seats 4 of the lateral wall 17 is suitable for delimiting the orientation seats 4 in the opposite direction to the first lateral surface 16, that is to say on a radially outward side thereof.

The feeding of the objects 2 onto the handling path 6 preferably takes place by means of the rotating plate 12 positioned radially inside the lateral wall 17 and configured so as to form, together with such lateral wall 17, a collection space 40 to collect the loose objects 2 to be orientated. The rotating plate 12 is preferably inclined and connected to a shaft 19 of a motor 20 attached to the support structure 3. The motor 20 is suitable for making the rotating plate 12 turn together with the series of orientation seats 2 so as to feed the objects 2 into the orientation seats 4 and move the orientation seats 4 along the handling path 6.

Thanks to the inclination of the rotating plate 12, the loose objects 2 tend to accumulate in its lowermost point which forms the feed point or feed section 9 of the handling path 6 where the single objects 2 fall into the seats 4.

A pneumatic blower 22 (also called pneumatic comb) may also be envisaged connected to the support structure 3, and configured to push the objects 2 into the seats 4, as well as a plurality of guide walls 23, connected to the seat support 5 or the rotating plate 12 and positioned above the access apertures 24 of the seats 4, and suitable for guiding the objects 2, during their conveying, into the seats 4.

As generally known, the orientation of the objects 2 is performed along the orientation section 11 of the handling path 6, which extends from the feed point 9 to the removal point 10 of the objects.

The expulsion means 26 preferably comprise one or more compressed air expulsion blowers 28, connected in a stationary manner to the support structure 3 (preferably to the circumferential wall 17) or to the seat support 5, and configured in such a way as to expel the objects 2 having an orientation other than that desired from the seats 4.

To such purpose, the walls of the seats 4 and/or the circumferential lateral surface 17 may have access windows 29 suitable for permitting access of the jet of compressed air to the objects 2 and having a shape such that the jet of compressed air mainly expels only the objects 2 having an orientation other than that desired. With particular reference to capsules, the capsules facing with their open side downwards are for example expelled, while those facing with their closed side downwards remain in the orientation seats 4.

During the extraction of the objects 2, they are removed from the orientation seats 4 and conveyed into the guide channel 18 along the extraction path 37. In the case of jamming or maintenance or cleaning operations of the guide channel 18 it is sufficient to turn the second lever 52 to release the mobile support 35 and raise the latter, helped by the spring 46, to the open position in which it can be blocked again by means of the second clamping group 49. After removal of the obstruction, the mobile support 35 together with the mobile wall 25 are lowered into the working position and rapidly blocked there by means of the second clamping group 49.

The invention may be advantageously implemented in various processing machines of objects of industrial interest, such as for example moulded plastic parts, in particular caps and capsules, metal objects, products of plant origin or foodstuffs.

Obviously, a person skilled in the art may make further modifications and variations to the orientation device 1 according to the present invention so as to satisfy contingent and specific requirements, while remaining within the sphere of protection of the invention, as defined by the following claims.

## Claims

1. Orientation device (1) for the orientation of objects (2), comprising:
a support structure (3),
- a series of orientation seats (4) wherein each single orientation seat (4) is suitable for receiving a single object (2),
- a seat support (5) connected to the support structure (3) and supporting the series of orientation seats (4), wherein said seat support (5) defines a handling path (6) of the objects (2),
- means for moving the series of orientation seats (4) in a direction of movement (8) along the handling path (6),
- an extractor (45) suitable for receiving the objects (2) in a removal point (10) of the handling path (6) and for removing the objects (2) from the orientation seats (4) along an extraction path (37) defined by a guide channel (18),
wherein the guide channel (18) comprises at least one wall (25) movable in a guided manner between an open position distanced from the extraction path (37) and a working position near the extraction path (37), as well as releasable blocking means (27) for blocking the mobile wall (25) in the working position,
wherein the guide channel (18) comprises a bottom surface (30) which the objects (2) rest on during extraction and two erected lateral guide surfaces (47, 48) opposite to and facing each other **characterized in that** the guide channel (18) further comprises an upper surface (31) opposite the bottom surface (30), wherein at least part of the upper surface (31) is formed in the mobile wall (25) and, by displacing the mobile wall (25) from the working position to the open position, the upper surface (31) is moved away from the bottom surface (30).

2. Orientation device (1) according to the preamble of claim 1, characterized that the guide channel (18) comprises an upper surface (31) opposite the bottom surface (30), wherein the mobile wall (25) forms at least part of one of the lateral guide surfaces (47, 48) and, by moving the mobile wall (25) from the working position to the open position, the lateral guide surfaces (47, 48) are moved away from each other.

3. Orientation device (1) according to claim 1, wherein the lateral guide surfaces (47, 48) comprise a first lateral guide surface (47) positioned on a first side of the extraction path (37) facing the handling path (6) and a second lateral guide surface (48) positioned on a second side of the extraction path (37) facing away from the handling path (6), wherein the mobile wall (25) forms the upper surface (31) and the first lateral guide surface (47).

4. Orientation device (1) according to any of the previous claims, wherein the mobile wall (25) has an elongated shape having an angular transversal cross-section with a concave side facing the inside of the guide channel (18).

5. Orientation device (1) according to any of the previous claims, wherein the mobile wall (25) extends along a predominant portion of the guide channel (18), said predominant portion being more than half the length of the guide channel (18), preferably more than 3/4 of the length of the guide channel (18).

6. Orientation device (1) according to any of the previous claims, wherein the extractor (45) comprises a guide device with at least one guide (34) mounted on the support structure (3), a mobile support (35) mounted so as to move along the guide (34) and at least one releasable connector (36) which connects the mobile wall (25) to the mobile support (35).

7. Orientation device (1) according to claim 6, wherein the releasable connector (36) comprises a first clamping group (38) connected to the mobile support (35) and having a clamping portion (39) configured to clamp the mobile wall (25) or an intermediate adaptor (41) connected to the mobile wall (25), against the mobile support (35), said clamping portion (39) being connected to a first releasable blocking mechanism (42) of the first clamping group (38) and manually operable by means of a first lever (43).

8. Orientation device (1) according to claim 7, wherein the mobile support (35) and the mobile wall (25) or intermediate adaptor (41) have abutment surfaces (4) which act as a geometric reference for their correct mutual positioning.

9. Orientation device (1) according to one of the claims from 6 to 8, wherein the mobile support (35) is elastically pressed in an opposite direction to the gravitational force acting on the mobile support (35).

10. Orientation device (1) according to any of the previous claims, wherein the releasable blocking means (27) comprise a second clamping group (49) connected to the support structure (3) and having a blocking portion (50) configured to abut against at least one of the following:
- the mobile support (35),
- the intermediate adaptor (41),
- the mobile wall (25),
and to block it in a position in which the mobile wall (25) is held in the working position ,
said blocking portion (50) being connected to a second releasable blocking mechanism (51) manually operable by means of a second lever (52).

11. Orientation device (1) according to claim 10, wherein the relative position between the blocking portion (50) and the second releasable blocking mechanism (51) is adjustable by means of an adjustment screw (54).

12. Orientation device (1) according to claim 10 or 11, wherein the second releasable blocking mechanism (51) comprises an articulated quadrilateral linkage mechanism.

13. Orientation device (1) according to any of the previous claims, wherein the releasable blocking means (27) are further configured to block the mobile wall (25) in the open position.

14. Orientation device (1) according to any of the previous claims, wherein the mobile wall (25) and a further wall of the guide channel (18) form abutment surfaces (53) which act as a geometric reference for the correct positioning of the mobile wall (25) in the working position.

15. Orientation device (1) according to any of the previous claims, wherein the seat support (5) is configured as a support ring (5) extending along an outer circumference of a rotating plate (12) so that the handling path (6) is substantially circular.

## Patentansprüche

1. Orientierungsvorrichtung (1) zum Orientieren von Objekten (2), umfassend:
- eine Trägerstruktur (3),
- eine Reihe von Orientierungssitzen (4), wobei jeder einzelne Orientierungssitz (4) dazu geeignet ist, ein einzelnes Objekt (2) aufzunehmen,
- einen Sitzträger (5), welcher mit der Trägerstruktur (3) verbunden ist und die Reihe von Orientierungssitzen (4) trägt, wobei der Sitzträger (5) einen Handhabungsweg (6) der Objekte (2) definiert,
- Mittel zum Bewegen der Reihe von Orientierungssitzen (4) in einer Bewegungsrichtung (8) entlang des Handhabungswegs (6),
- eine Entnahmevorrichtung (45), welche dazu geeignet ist, die Objekte (2) an einer Entfernungsstelle (10) des Handhabungswegs (6) aufzunehmen und die Objekte (2) von den Orientierungssitzen (4) entlang eines durch einen Führungskanal (18) definierten Entnahmewegs (37) zu entfernen,
wobei der Führungskanal (18) wenigstens eine Wand (25), welche zwischen einer von dem Entnahmeweg (37) beabstandeten offenen Position und einer Arbeitsposition nahe des Entnahmewegs (37) geführt bewegbar ist, sowie lösbare Blockiermittel (27) zum Blockieren der beweglichen Wand (25) in der Arbeitsposition umfasst,
wobei der Führungskanal (18) eine untere Fläche (30), auf welcher die Objekte (2) während der Entnahme ruhen, und zwei aufrechte seitliche Führungsflächen (47, 48) umfasst, welche einander gegenüberliegen und einander zugewandt sind, **dadurch gekennzeichnet, dass** der Führungskanal (18) ferner eine der unteren Fläche (30) gegenüberliegende obere Fläche (31) umfasst, wobei wenigstens ein Teil der oberen Fläche (31) in der beweglichen Wand (25) ausgebildet ist und die obere Fläche (31) durch Verlagern der beweglichen Wand (25) aus der Arbeitsposition in die offene Position von der unteren Fläche (30) wegbewegt wird.

2. Orientierungsvorrichtung (1) nach dem Oberbegriff von Anspruch 1, **dadurch gekennzeichnet, dass** der Führungskanal (18) eine der unteren Fläche (30) gegenüberliegende obere Fläche (31) umfasst, wobei die bewegliche Wand (25) wenigstens einen Teil einer der seitlichen Führungsflächen (47, 48) bildet und die seitlichen Führungsflächen (47, 48) durch Bewegen der beweglichen Wand (25) aus der Arbeitsposition in die offene Position voneinander wegbewegt werden.

3. Orientierungsvorrichtung (1) nach Anspruch 1, wobei die seitlichen Führungsflächen (47, 48) eine erste seitliche Führungsfläche (47), welche an einer ersten Seite des Entnahmewegs (37) dem Handhabungsweg (6) zugewandt positioniert ist, und eine zweite seitliche Führungsfläche (48) umfassen, welche an einer zweiten Seite des Entnahmewegs (37) dem Handhabungsweg (6) abgewandt positioniert ist, wobei die bewegliche Wand (25) die obere Fläche (31) und die erste seitliche Führungsfläche (47) bildet.

4. Orientierungsvorrichtung (1) nach einem der vorhergehenden Ansprüche, wobei die bewegliche Wand (25) von einer länglichen Form ist, welche einen eckigen transversalen Querschnitt mit einer dem Inneren des Führungskanals (18) zugewandten konkaven Seite aufweist.

5. Orientierungsvorrichtung (1) nach einem der vorhergehenden Ansprüche, wobei sich die bewegliche Wand (25) entlang eines überwiegenden Teils des Führungskanals (18) erstreckt, wobei der überwiegende Teil länger als die Hälfte der Länge des Führungskanals (18), bevorzugt länger als 3/4 der Länge des Führungskanals (18) ist.

6. Orientierungsvorrichtung (1) nach einem der vorhergehenden Ansprüche, wobei die Entnahmevorrichtung (45) umfasst: eine Führungsvorrichtung mit wenigstens einer an der Trägerstruktur (3) montierten Führung (34), einen beweglichen Träger (35), welcher derart montiert ist, dass er sich entlang der Führung (34) bewegt, und wenigstens eine lösbare Verbindungsvorrichtung (36), welche die bewegliche Wand (25) mit dem beweglichen Träger (35) verbindet.

7. Orientierungsvorrichtung (1) nach Anspruch 6, wobei die lösbare Verbindungsvorrichtung (36) eine erste Klemmgruppe (38) umfasst, welche mit dem beweglichen Träger (35) verbunden ist und einen Klemmabschnitt (39) aufweist, der dazu eingerichtet ist, die bewegliche Wand (25) oder einen mit der beweglichen Wand (25) verbundenen Zwischenadapter (41) gegen den beweglichen Träger (35) zu drücken, wobei der Klemmabschnitt (39) mit einem ersten lösbaren Blockiermechanismus (42) der ersten Klemmgruppe (38) verbunden und manuell mittels eines ersten Hebels (43) betätigbar ist.

8. Orientierungsvorrichtung (1) nach Anspruch 7, wobei der bewegliche Träger (35) und die bewegliche Wand (25) oder der Zwischenadapter (41) Anlageflächen (4) aufweisen, welche als ein geometrischer Bezug für deren korrekte manuelle Positionierung dienen.

9. Orientierungsvorrichtung (1) nach einem der Ansprüche 6 bis 8, wobei der bewegliche Träger (35) elastisch in einer der an dem beweglichen Träger (35) angreifenden Gravitationskraft entgegengesetzten Richtung gedrückt ist.

10. Orientierungsvorrichtung (1) nach einem der vorhergehenden Ansprüche, wobei die lösbaren Blockiermittel (27) eine zweite Klemmgruppe (49) umfassen, welche mit der Trägerstruktur (3) verbunden ist und einen Blockierabschnitt (50) aufweist, der dazu eingerichtet ist, gegen wenigstens eine der folgenden anzuliegen:
- den beweglichen Träger (35),
- den Zwischenadapter (41),
- die bewegliche Wand (25),
und ihn/sie in einer Position zu blockieren, in welcher die bewegliche Wand (25) in der Arbeitsposition gehalten ist,
wobei der Blockierabschnitt (50) mit einem zweiten lösbaren Blockiermechanismus (51) verbunden ist, welcher manuell mittels eines zweiten Hebels (52) betätigbar ist.

11. Orientierungsvorrichtung (1) nach Anspruch 10, wobei die relative Position zwischen dem Blockierabschnitt (50) und dem zweiten lösbaren Blockiermechanismus (51) mittels einer Einstellschraube (54) einstellbar ist.

12. Orientierungsvorrichtung (1) nach Anspruch 10 oder 11, wobei der zweite lösbare Blockiermechanismus (51) einen vierseitigen Gelenkverbindungsmechanismus umfasst.

13. Orientierungsvorrichtung (1) nach einem der vorhergehenden Ansprüche, wobei die lösbaren Blockiermittel (27) ferner dazu eingerichtet sind, die bewegliche Wand (25) in der offenen Position zu blockieren.

14. Orientierungsvorrichtung (1) nach einem der vorhergehenden Ansprüche, wobei die bewegliche Wand (25) und eine weitere Wand des Führungskanals (18) Anlageflächen (53) bilden, welche als ein geometrischer Bezug zum korrekten Positionieren der beweglichen Wand (25) in der Arbeitsposition dienen.

15. Orientierungsvorrichtung (1) nach einem der vorhergehenden Ansprüche, wobei der Sitzträger (5) als ein Trägerring (5) eingerichtet ist, welcher sich entlang eines Außenumfangs einer rotierenden Platte (12) erstreckt, so dass der Handhabungsweg (6) im Wesentlichen kreisförmig ist.

## Revendications

1. Dispositif d'orientation (1) pour l'orientation d'objets (2), comprenant :
- une structure de support (3),
- une série de sièges d'orientation (4), dans lequel chaque siège d'orientation (4) unique est approprié pour recevoir un objet (2) unique,
- un support de sièges (5) relié à la structure de support (3) et supportant la série de sièges d'orientation (4), dans lequel ledit support de sièges (5) définit un trajet de manipulation (6) des objets (2),
- des moyens pour déplacer la série de sièges d'orientation (4) dans une direction de déplacement (8) le long du trajet de manipulation (6),
- un extracteur (45) approprié pour recevoir les objets (2) en un point de retrait (10) du trajet de manipulation (6) et pour retirer les objets (2) des sièges d'orientation (4) le long d'un trajet d'extraction (37) défini par un canal de guidage (18),
dans lequel le canal de guidage (18) comprend au moins une paroi (25) pouvant être déplacée d'une manière guidée entre une position ouverte à distance du trajet d'extraction (37) et une position de travail à proximité du trajet d'extraction (37), ainsi que des moyens de blocage libérables (27) pour bloquer la paroi mobile (25) dans la position de travail,
dans lequel le canal de guidage (18) comprend une surface de fond (30) sur laquelle les objets (2) reposent pendant l'extraction et deux surfaces de guidage latérales dressées (47, 48) opposées et se faisant mutuellement face, **caractérisé en ce que** le canal de guidage (18) comprend en outre une surface supérieure (31) opposée à la surface de fond (30), dans lequel au moins une partie de la surface supérieure (31) est formée dans la paroi mobile (25) et, en déplaçant la paroi mobile (25) de la position de travail à la position ouverte, la surface supérieure (31) est éloignée de la surface de fond (30).

2. Dispositif d'orientation (1) selon le préambule de la revendication 1, **caractérisé en ce que** le canal de guidage (18) comprend une surface supérieure (31) opposée à la surface de fond (30), dans lequel la paroi mobile (25) forme au moins une partie de l'une des surfaces de guidage latérales (47, 48) et, en déplaçant la paroi mobile (25) de la position de travail à la position ouverte, les surfaces de guidage latérales (47, 48) sont éloignées l'une de l'autre.

3. Dispositif d'orientation (1) selon la revendication 1, dans lequel les surfaces de guidage latérales (47, 48) comprennent une première surface de guidage latérale (47) positionnée sur un premier côté du trajet d'extraction (37) faisant face au trajet de manipulation (6) et une deuxième surface de guidage latérale (48) positionnée sur un deuxième côté du trajet d'extraction (37) orienté à l'opposé du trajet de manipulation (6), dans lequel la paroi mobile (25) forme la surface supérieure (31) et la première surface de guidage latérale (47).

4. Dispositif d'orientation (1) selon l'une quelconque des revendications précédentes, dans lequel la paroi mobile (25) a une forme allongée ayant une section transversale angulaire avec un côté concave orienté vers l'intérieur du canal de guidage (18).

5. Dispositif d'orientation (1) selon l'une quelconque des revendications précédentes, dans lequel la paroi mobile (25) s'étend le long d'une partie prédominante du canal de guidage (18), ladite partie prédominante étant égale à plus de la moitié de la longueur du canal de guidage (18), de préférence à plus des 3/4 de la longueur du canal de guidage (18).

6. Dispositif d'orientation (1) selon l'une quelconque des revendications précédentes, dans lequel l'extracteur (45) comprend un dispositif de guidage avec au moins un guide (34) monté sur la structure de support (3), un support mobile (35) monté de manière à se déplacer le long du guide (34) et au moins un raccord libérable (36) qui relie la paroi mobile (25) au support mobile (35).

7. Dispositif d'orientation (1) selon la revendication 6, dans lequel le raccord libérable (36) comprend un premier groupe de serrage (38) relié au support mobile (35) et comportant une partie de serrage (39) configurée pour serrer la paroi mobile (25) ou un adaptateur intermédiaire (41) relié à la paroi mobile (25), contre le support mobile (35), ladite partie de serrage (39) étant reliée à un premier mécanisme de blocage libérable (42) du premier groupe de serrage (38) et pouvant être actionnée manuellement au moyen d'un premier levier (43).

8. Dispositif d'orientation (1) selon la revendication 7, dans lequel le support mobile (35) et la paroi mobile (25) ou l'adaptateur intermédiaire (41) ont des surfaces de butée (4) qui agissent en tant que référence géométrique pour leur positionnement mutuel correct.

9. Dispositif d'orientation (1) selon l'une des revendications 6 à 8, dans lequel le support mobile (35) est pressé de manière élastique dans une direction opposée à celle de la force gravitationnelle agissant sur le support mobile (35).

10. Dispositif d'orientation (1) selon l'une quelconque des revendications précédentes, dans lequel les moyens de blocage libérables (27) comprennent un deuxième groupe de serrage (49) relié à la structure de support (3) et comportant une partie de blocage (50) configurée pour venir en butée contre au moins l'un des éléments suivants :
- le support mobile (35),
- l'adaptateur intermédiaire (41),
- la paroi mobile (25),
et pour le bloquer dans une position dans laquelle la paroi mobile (25) est maintenue dans la position de travail,
ladite partie de blocage (50) étant reliée à un deuxième mécanisme de blocage libérable (51) pouvant être actionné manuellement au moyen d'un deuxième levier (52).

11. Dispositif d'orientation (1) selon la revendication 10, dans lequel la position relative entre la partie de blocage (50) et le deuxième mécanisme de blocage libérable (51) peut être ajustée au moyen d'une vis de réglage (54).

12. Dispositif d'orientation (1) selon la revendication 10 ou 11, dans lequel le deuxième mécanisme de blocage libérable (51) comprend un mécanisme de liaison à quadrilatère articulé.

13. Dispositif d'orientation (1) selon l'une quelconque des revendications précédentes, dans lequel les moyens de blocage libérables (27) sont en outre configurés pour bloquer la paroi mobile (25) dans la position ouverte.

14. Dispositif d'orientation (1) selon l'une quelconque des revendications précédentes, dans lequel la paroi mobile (25) et une paroi supplémentaire du canal de guidage (18) forment des surfaces de butée (53) qui agissent en tant que référence géométrique pour le positionnement correct de la paroi mobile (25) dans la position de travail.

15. Dispositif d'orientation (1) selon l'une quelconque des revendications précédentes, dans lequel le support de sièges (5) est configuré en tant que bague de support (5) s'étendant le long d'une circonférence extérieure d'une plaque rotative (12) de sorte que le trajet de manipulation (6) est sensiblement circulaire.
